# FASCICULE DE BREVET EUROPEEN

(11) **EP 1 886 058 B1**
(45) Date de publication et mention de la délivrance du brevet: **12.03.2014**
(21) Numéro de dépôt: 06726170.1
(22) Date de dépôt: 03.04.2006
(51) Int. Cl.: F16L 55/027, F16L 55/033, B60T 17/00

(54) **DISPOSITIF D'ATTÉNUATION ACOUSTIQUE**
SCHALLDÄMPFUNGSVORRICHTUNG
ACOUSTIC ATTENUATION DEVICE

(30) Priorité: 12.04.2005 FR 0503602
(43) Date de publication de la demande: 13.02.2008
(73) Titulaire: Société Nationale des Chemins de Fer Français, 75014 Paris (FR)
(72) Inventeur: MARCOUX, Serge, F-37270 Montlouis S/Loire (FR)
(74) Mandataire: Jouanneau, Lionel
(86) Numéro de dépôt international: PCT/FR2006/000724
(87) Numéro de publication internationale: WO 2006/108946

(56) Documents cités:
- EP-A- 0 019 855
- DE-A1- 2 904 529
- FR-A- 2 566 092
- US-A- 2 600 236
- US-A- 3 960 239
- US-A- 4 287 917
- US-A- 4 316 523
- US-A- 6 053 276
- US-B1- 6 672 425

## Description

La présente invention se rapporte à un dispositif d'atténuation acoustique destiné à être raccordé à une sortie d'air sous pression.

La libération soudaine d'une grande quantité d'air sous pression peut générer un bruit d'une intensité sonore très élevée, qui peut même devenir dangereuse pour des personnes se trouvant à proximité. Or, il est parfois nécessaire de vidanger de cette manière un réservoir d'air sous pression afin qu'un opérateur puisse vérifier son état et s'assurer notamment de sa bonne étanchéité, mise en pression, et libération d'air. C'est le cas par exemple pour les circuits de freinage d'un train. En effet, le freinage d'un train s'effectue par diminution de la pression dans le circuit de freinage, des semelles venant alors se plaquer contre les roues du train pour le freiner. La mise en pression, l'étanchéité, et la continuité de la pression dans tout le circuit sont, entre autres, des paramètres importants qu'il est nécessaire de contrôler.

La vérification du circuit de freinage d'un train implique plusieurs étapes réalisées par au moins un opérateur. Tout d'abord, l'opérateur s'assure du bon fonctionnement de chaque semelle de frein, puis il est procédé à une vidange complète de la conduite d'air du circuit de freinage afin d'en vérifier la continuité. Sachant que la pression de l'air dans ces conduites peut atteindre jusqu'à 9 bars, l'intensité du bruit généré atteint à proximité de la sortie d'air sous pression environ 121 dB. Cette valeur est proche du seuil de douleur et sa répétition risque de causer un handicap auditif chez l'opérateur. Il n'est donc pas acceptable d'exposer un opérateur effectuant ce type de vérification à une telle intensité sonore.

Des dispositifs atténuateurs de bruit ont été développés pour résoudre ce problème et permettre à un opérateur d'assurer sans danger son travail. On connaît notamment un dispositif d'atténuation acoustique comprenant un corps creux allongé destiné à être raccordé à une sortie d'air sous pression par l'intermédiaire d'une première extrémité ouverte équipée d'une tête d'accouplement et présentant des ouvertures d'échappement de l'air ménagées radialement dans une paroi du tube à proximité d'une deuxième extrémité fermée. L'atténuation acoustique est obtenue en disposant à l'intérieur du corps creux, un garnissage en tricot d'acier inoxydable roulé sur lui-même et formant un tampon filtrant l'air. En effet, l'air circulant à travers le garnissage suit des chemins différents, ce qui freine la propagation et le développement de zones de détente et de pression, génératrices du bruit.

Un tel dispositif permet de réduire l'intensité du bruit en sortie de la conduite d'air sous pression de 120 dB à environ 78 dB pour une conduite d'air sous une pression de 5 bars environ. Cette valeur de 78 dB peut encore être jugée trop élevée par les opérateurs et il est souhaitable de la réduire. Il convient toutefois de noter qu'un contrôle par un opérateur nécessite de conserver un bruit minimum afin que la dépressurisation reste audible. Il a été fixé par une norme que l'intensité du bruit de l'air de sortie de la conduite ne devait pas être inférieure à 70 dB. Par ailleurs, un tel dispositif réduit la vitesse de l'air en sortie et il n'est pas souhaitable de trop allonger la durée nécessaire à une vidange totale de la conduite. La même norme précédemment évoquée a ainsi fixé qu'un réservoir de 600 L d'air à 5 bars devait pouvoir être vidangé jusqu'à une pression finale de 0,4 bar en moins d'environ une minute.

La présente invention a pour but de fournir un dispositif amélioré répondant aux exigences de la norme tout en procurant une atténuation acoustique accrue, et consiste pour cela en un dispositif d'atténuation acoustique comprenant un corps creux allongé possédant une extrémité amont ouverte réalisée sous la forme d'une tête d'accouplement à une sortie d'air sous pression, et une extrémité aval fermée, ledit corps creux présentant une paroi latérale pourvue d'une pluralité d'ouvertures d'échappement d'air ménagées en partie aval, caractérisé en ce que le corps creux contient au moins un garnissage tampon amont formant un filtre longitudinal et au moins un garnissage filtrant aval formant une gaine.

Ainsi, en prévoyant au moins un garnissage aval opérant un filtrage radial, il a été constaté qu'un dispositif selon l'invention permettait d'atténuer le bruit généré de manière plus efficace.

Selon une première variante de réalisation, le garnissage amont est réalisé par enroulement sur elle-même d'une trame filtrante réalisée dans un matériau adapté.

Selon une deuxième variante de réalisation, le garnissage amont est réalisé sous la forme d'un compartiment contenant des éléments de garnissage réalisés dans un matériau adapté et disposés en vrac.

Les matériaux utilisés pour le garnissage amont pourront notamment être à base d'acier inoxydable, de matériaux synthétiques ou composites. De préférence, on utilisera un tricot d'acier inoxydable roulé sur lui-même ou disposé en vrac, ce matériau résistant de manière particulièrement satisfaisante à la compression longitudinale que cause le passage de l'air sous pression.

Avantageusement, le garnissage aval est disposé autour d'un mandrin ajouré destiné à lui servir de support. Le mandrin ajouré pourra, par exemple, être formé par un ressort en fil rond, permettant ainsi de réduire sa résistance à l'air destiné à circuler à travers le dispositif selon l'invention.

De manière préférentielle, le garnissage aval est réalisé par enroulement d'au moins une bande d'au moins un matériau adapté autour du mandrin.

Selon un mode de réalisation préféré, le garnissage aval se décompose en au moins une gaine réalisée dans un matériau filtrant adapté enserrée par une gaine de retenue en pression. Avantageusement, la gaine filtrante et la gaine de retenue en pression sont réalisées à partir de bandes superposées de même largeur et enroulées autour du mandrin. Avantageusement encore, la bande destinée à former la gaine de retenue en pression possède une longueur supérieure à la bande filtrante. Ainsi, la bande destinée à former la gaine de retenue en pression est enroulée une première fois autour du mandrin avant de l'enrouler avec la bande filtrante.

De manière préférentielle, la gaine de retenue en pression est réalisée en tissu d'acier inoxydable.

De manière avantageuse, le garnissage aval comprend au moins un matériau composite. Préférentiellement, le matériau composite est un non tissé de fibre de verre. Ce matériau est particulièrement reconnu pour ses propriétés d'isolation acoustique.

Avantageusement, une rondelle multiperforée est disposée à l'entrée du garnissage amont. Ainsi, le flux d'air traversant le dispositif est plus efficacement réparti sur l'ensemble de la section du garnissage amont.

De manière encore plus avantageuse, une rondelle à perforation centrale est disposée entre le garnissage amont et le garnissage aval. Ainsi, le flux d'air est canalisé en sortie du garnissage amont et centré sur l'axe du tube du garnissage aval.

Il convient de noter que la présente invention ne se limite pas à un dispositif à deux garnissages et qu'il est tout à fait possible de disposer plusieurs garnissages formant tampon et/ou plusieurs garnissages formant une gaine.

La mise en oeuvre de l'invention sera mieux comprise.à l'aide de la description détaillée qui est exposée ci-dessous en regard du dessin annexé dans lequel :
La figure 1 est une représentation schématique en coupe longitudinale d'un dispositif acoustique selon l'invention.
La figure 2 est une vue en coupe selon la ligne II-II de la figure 1.
La figure 3 est une vue en coupe selon la ligne III-III de la figure 1.
La figure 4 est une vue en coupe selon la ligne IV-IV de la figure 1.
La figure 5 est une vue en coupe selon la ligne V-V de la figure 1.
La figure 6 est une représentation de la disposition de deux couches de matériaux avant enroulement autour d'un mandrin.

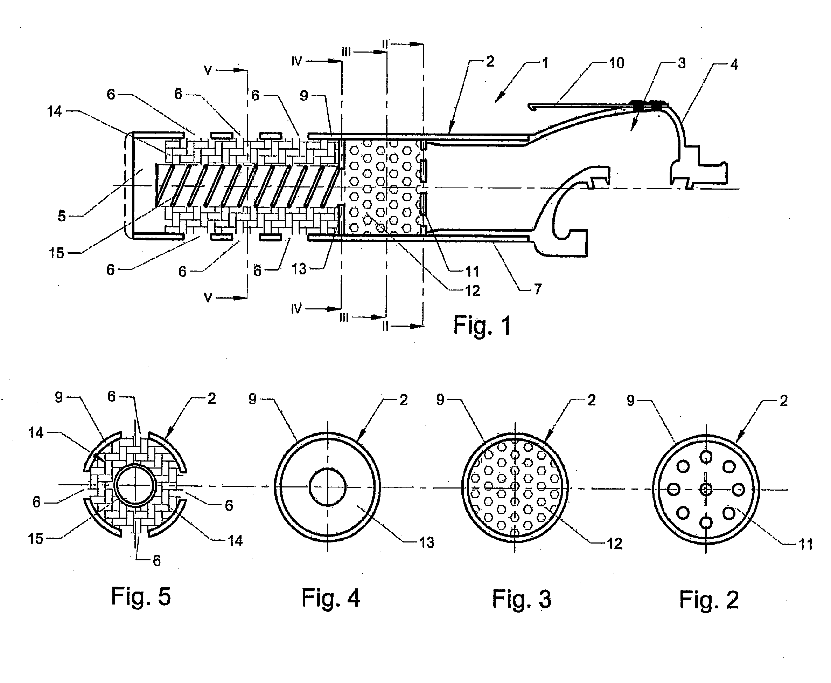

Un dispositif d'atténuation acoustique, tel que représenté en coupe sur la figure 1, comprend un corps creux 1 allongé réalisé à partir d'un tube 2 cylindrique, une tête d'accouplement 4 et un fond 5.

Le tube 2 présente des ouvertures d'échappements 6 de l'air ménagées radialement en partie aval dans une paroi latérale 9. Par ailleurs, le tube 2 est réalisé de préférence dans un matériau léger mais capable de résister à de fortes pressions. Ce matériau pourra par exemple être un matériau composite moulé sous vide puis cuit. Avantageusement, la paroi latérale 9 du tube 2 comprend en partie amont un revêtement antidérapant de manière à faciliter la prise en main et la manoeuvre du dispositif.

La tête d'accouplement 4 est destinée à permettre la connexion du dispositif sur une sortie d'air sous pression (non représentée) d'une canalisation d'un circuit de freinage d'un train, et possède des dimensions standard correspondantes. Par ailleurs la tête d'accouplement 4 présente une patte de fixation 10 permettant de suspendre le dispositif à une ceinture par exemple. La tête d'accouplement 4, généralement réalisée en fonte d'acier grise, pourra avantageusement être réalisée dans un matériau plus léger, telle que de la fonte d'aluminium. La tête d'accouplement 4 est solidement fixée, par exemple par collage, dans une extrémité amont 7 du tube 2.

La tête d'accouplement 4 ainsi fixée, il est procédé à la mise en place du garnissage du tube 2. Celui-ci comprend tout d'abord un rondelle multiperforée 11 possédant un diamètre sensiblement égal au diamètre du tube 2, telle que représentée sur la figure 2, venant prendre appui contre la tête d'accouplement 4 et contre laquelle un garnissage amont 12 formant tampon vient en butée, comme représenté sur la figure 3. Ce garnissage amont 12 est réalisé, par exemple, à partir d'un tricot d'acier inoxydable roulé sur lui-même.

Il convient de noter que d'autres matériaux peuvent être utilisés pour la réalisation du garnissage amont 12, par exemple, des matériaux synthétiques, composites, voire des matériaux naturels. Ce garnissage amont 12 peut par ailleurs être réalisé à partir de matériaux pris sous la forme d'une trame filtrante ou disposés en vrac dans un compartiment dont la rondelle multiperforée 11 peut former une paroi.

Le garnissage amont 12 est fermé par une rondelle à perforation centrale 13 possédant un diamètre sensiblement égal au diamètre du tube 2, telle que représentée sur la figure 4, et prenant appui sur le garnissage amont 12. Cette rondelle à perforation centrale 13 est suivie d'un garnissage aval 14 filtrant formant une gaine, représenté sur la figure 5. Il convient de noter que la rondelle à perforation centrale 13 pourra former une deuxième paroi du compartiment dans le cas où le garnissage amont 12 est réalisé à partir d'éléments disposés en vrac.

Le garnissage aval 14 est disposé autour d'un mandrin 15 ajouré formé par un ressort à fil rond et destiné à servir de support aux matériaux formant le garnissage aval 14. L'utilisation d'un ressort à fil rond permet d'offrir une résistance minimale à l'air qui le traverse. Plus précisément, Le garnissage aval 14 comprend, d'une part, une gaine de retenue en pression réalisée à partir d'une bande de tissu d'acier inoxydable 16, et d'autre part, une bande d'un matériau composite 17, par exemple de la fibre de verre non tissée. La bande de tissu d'acier inoxydable 16 et la bande de matériau composite 17 sont enroulées ensemble autour du mandrin 15 ajouré. Il résulte d'un tel enroulement une alternance de couches de tissu d'acier inoxydable 16 et de matériau composite 17. Dans le cas où le matériau composite 17 est un non-tissé de fibres de verre par exemple, le maintien des fibres est ainsi assuré par le tissu d'acier inoxydable 16 et le matériau composite 17 ne se dégradera pas sous l'effet du passage de l'air sous pression. Chaque couche de tissu d'acier inoxydable 16 forme ainsi une gaine de retenue à la pression enserrant une couche de matériau filtrant.

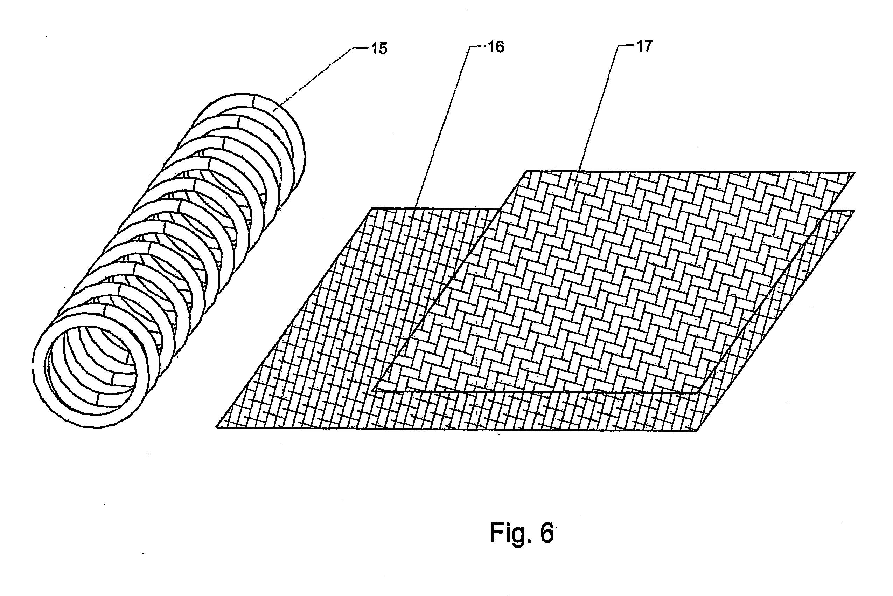

La bande de tissu d'acier inoxydable 16 et la bande de matériau composite 17 possèdent une largeur identique et sont enroulées ensemble autour du mandrin 15. Toutefois la bande de tissu d'acier inoxydable 16 possède une longueur supérieure à la bande de tissu de matériau composite 17, la différence de longueur correspondant à un premier tour de la bande de tissu d'acier inoxydable 16 autour du mandrin 15. La disposition des deux bandes avant enroulement est représentée sur la figure 6.

Il convient de noter que les ouvertures d'échappement 6 en partie aval du tube 2 sont réparties le long du garnissage aval 14. Plus précisément, le tube 2 présente trois zones circulaires pourvues chacune de quatre ouvertures d'échappement 6 uniformément réparties sur la circonférence du tube 2.

Une fois le garnissage ainsi disposé à l'intérieur du tube 2, le fond 5 est ensuite thermocollé au tube 2 au niveau d'une extrémité aval 8 de manière à venir fermer ladite extrémité aval 8. Le fond 5 sera avantageusement réalisé en fonte d'aluminium en raison des efforts de pression qu'il est destiné à subir. Il convient toutefois de noter que le tube 2 et le fond 5 peuvent être réalisés d'une seule pièce, le garnissage étant alors introduit dans le tube 2 par l'extrémité amont que vient fermer ensuite la tête d'accouplement 4.

Un opérateur réalisant une vérification du circuit de freinage d'un train procédera de la façon suivante.

Tout d'abord, l'opérateur connecte le dispositif à la sortie d'air qu'il souhaite contrôler à l'aide de la tête d'accouplement 4.

Il est alors procédé à l'ouverture du robinet d'arrêt et à la vidange de la conduite. L'air sous pression traverse la tête d'accouplement 4 puis s'engage à grande vitesse dans l'ensemble du corps creux 1.

Cet air traverse tout d'abord la rondelle multiperforée 11 qui le divise en une pluralité de flux répartis sur toute la section du tube 2 avant de pénétrer à l'intérieur du garnissage amont 12 qu'il traverse longitudinalement. En sortie du garnissage amont 12, le flux d'air traverse la rondelle à perforation centrale 13 qui canalise ce flux d'air à l'intérieur de la gaine que forme le garnissage aval 14. Le flux d'air traverse enfin radialement le mandrin 15 ajouré et le garnissage aval 14 avant de sortir du dispositif par les ouvertures d'échappements 6.

Ainsi, en circulant à travers des garnissages adaptés, ceux-ci brisent les zones de pressions et de détente de l'air qui se propage, ce qui réduit le bruit généré.

Des expériences ont mis en évidence que les 120 dB engendrés par une dépressurisation sans dispositif d'atténuation acoustique d'une conduite d'air sous une pression de 5 bars chutent à 74 dB en utilisant le dispositif d'atténuation selon l'invention. Cela représente un gain de 3 dB, soit une intensité sonore diminuée de moitié par rapport au dispositif connu de l'état de la technique, et respecte le seuil minimum d'audibilité de 70 dB fixé par la norme.

Il doit être également bien compris que l'invention n'est pas limitée à un seul garnissage formant tampon et qu'il est bien entendu possible de prévoir une pluralité d'étages de chaque type, tampon ou gaine.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention, tel que définit par les revendications.

## Revendications

1. Dispositif d'atténuation acoustique comprenant un corps creux (2, 4, 5) allongé possédant une extrémité amont ouverte réalisée sous la forme d'une tête d'accouplement (4) à une sortie d'air sous pression, et une extrémité aval fermée, ledit corps creux présentant une paroi latérale (9) pourvue d'une pluralité d'ouvertures d'échappement (6) d'air ménagées en partie aval, **caractérisé en ce que** le corps creux contient au moins un garnissage tampon amont (12) formant un filtre longitudinal et au moins un garnissage filtrant aval (14) formant une gaine.

2. Dispositif selon la revendication 1, **caractérisé en ce que** le garnissage amont (12) est réalisé par enroulement sur elle-même d'une trame filtrante réalisée dans un matériau adapté.

3. Dispositif selon la revendication 1, **caractérisé en ce que** le garnissage amont (12) est réalisé sous la forme d'un compartiment contenant des éléments de garnissage réalisés dans un matériau adapté et disposés en vrac.

4. Dispositif selon l'une quelconque des revendications 1 à 3, **caractérisé en ce que** le garnissage aval (14) est disposé autour d'un mandrin (15) ajouré destiné à lui servir de support.

5. Dispositif selon la revendication 4, **caractérisé en ce que** le garnissage aval (14) est réalisé par enroulement d'au moins une bande d'au moins un matériau (17) adapté autour du mandrin (15).

6. Dispositif selon l'une quelconque des revendications 4 ou 5, **caractérisé en ce que** le garnissage aval (14) se décompose en au moins une gaine réalisée dans un matériau filtrant adapté enserrée par une gaine de retenue en pression.

7. Dispositif selon la revendication 6, **caractérisé en ce que** la gaine filtrante et la gaine de retenue en pression sont réalisées à partir de bandes superposées de la même largeur et enroulées autour du mandrin (15).

8. Dispositif selon la revendication 7, **caractérisé en ce que** la bande destinée à former la gaine de retenue en pression possède une longueur supérieure à la bande filtrante.

9. Dispositif selon l'une quelconque des revendications 6 à 7, **caractérisé en ce que** la gaine de retenue en pression est réalisée en tissu d'acier inoxydable.

10. Dispositif selon l'une quelconque des revendications 1 à 9, **caractérisé en ce que** le garnissage aval (14) comprend au moins un matériau composite (17).

11. Dispositif selon la revendication 10, **caractérisé en ce que** le matériau composite (17) est un non tissé de fibre de verre.

12. Dispositif selon l'une quelconque des revendications 1 à 11, **caractérisé en ce qu'**une rondelle multiperforée (11) est disposée à l'entrée du garnissage amont (12).

13. Dispositif selon l'une quelconque des revendications 1 à 12, **caractérisé en ce qu'**une rondelle à perforation centrale (13) est disposée entre le garnissage amont (12) et le garnissage aval (14).

## Patentansprüche

1. Gerät zur akustischen Dämpfung bestehend aus einem langgestreckten Hohlkörper (2, 4, 5) mit einem als Kupplungskopfes (4) zu einer Druckluftauslass ausgebildeten offenen stromaufwärts gelegenes Ende, sowie einem geschlossenen stromabwärts gelegenes Ende ; das beschriebene Hohlkörper umgibt eine Seitenwand (9), die in der stromabwärts gelegenen Teil mit einer Vielzahl von Entlüftungsöffnungen (6) versehen ist und **dadurch gekennzeichnet, dass** der Hohlkörper mindestens einen stromaufwärts Pufferbereich welches eine Längs Filter bildet (12) und mindestens einen stromabwärts Filterbereich (14) welches einen Hülle bildet, enthält.

2. Gerät nach Anspruch 1 **dadurch gekennzeichnet, dass** der stromaufwärts Pufferbereich (12) durch eine in sich gerollte Filterstruktur aus dafür geeignetem Material hergestellt wird.

3. Gerät nach Anspruch 1 **dadurch gekennzeichnet, dass** der stromaufwärts Pufferbereich (12) aus einem mit entsprechendem losen Werkstoff gefütterten Raum besteht.

4. Gerät nach einem der Ansprüche 1 bis 3 **dadurch gekennzeichnet, dass** der stromabwärts Filterbereich (14) sich um einen offenen Dorn (15) legt, der ihn stützt.

5. Gerät nach Anspruch 4 **dadurch gekennzeichnet, dass** der stromabwärts Filterbereich (14) aus mindestens einer Lage mindestens eines passenden, um den Dorn (15) gewickelten Werkstoffs (17) besteht.

6. Gerät nach einem der Ansprüche 4 oder 5 **dadurch gekennzeichnet, dass** der stromabwärts Filterbereich (14) aus mindestens einer Hülle aus angemessenem filterndem Werkstoff besteht, eingeschlossen von einer Hülle die den Druck zurückhält.

7. Gerät nach Anspruch 6 **dadurch gekennzeichnet, dass** die filternde Hülle und die druckausgleichende Hülle aus übereinanderliegenden, um den Dorn gewickelten Schichten gleicher Breite bestehen (15).

8. Gerät nach Anspruch 7 **dadurch gekennzeichnet, dass** die druckausgleichende Hülle länger als die filternde Hülle ist.

9. Gerät nach einem der Ansprüche 6 bis 7 **dadurch gekennzeichnet, dass** die druckausgleichende Hülle aus Edelstahlgewebe besteht.

10. Gerät nach einem der Ansprüche 1 bis 9 **dadurch gekennzeichnet, dass** der stromabwärts Filterbereich (14) mindestens einen Verbundstoff (17) enthält.

11. Gerät nach Anspruch 10 **dadurch gekennzeichnet, dass** der Verbundstoff (17) aus Vliesglasfasermaterial ist.

12. Gerät nach einem der Ansprüche 1 bis 11 **dadurch gekennzeichnet, dass** eine mehrfach gelochte Scheibe (11) am Eingang des stromaufwärts Pufferbereichs (12) platziert ist.

13. Gerät nach einem der Ansprüche 1 bis 12 **dadurch gekennzeichnet, dass** eine in der Mitte gelochte Scheibe (13) zwischen dem Pufferbereich (12) und dem Filterbereich (14) platziert wird.

## Claims

1. An acoustic attenuation device comprising an elongated hollow body (2, 4, 5) having an open upstream end made up in the form of a coupling head (4) to a pressurized air outlet, and a closed downstream end, said hollow body having a side wall (9) provided with a plurality of air exhaust openings (6) arranged in downstream portion, **characterized in that** the hollow body contains at least one upstream buffer lining (12) forming a longitudinal filter and at least one downstream filtering lining (14) forming a sheath.

2. The device according to claim 1, **characterized in that** the upstream lining (12) is made up by winding around itself a filtering frame made of a suitable material.

3. The device according to claim 1, **characterized in that** the upstream lining (12) is made up in the form of a compartment containing lining members made of a suitable material and arranged in bulk.

4. The device according to any one of claims 1 to 3, **characterized in that** the downstream lining (14) is arranged around an apertured mandrel (15) intended to serve as a support.

5. The device according to claim 4, **characterized in that** the downstream lining (14) is made up by winding at least one strip of at least one suitable material (17) around the mandrel (15).

6. The device according to any one of claims 4 or 5, **characterized in that** the downstream lining (14) is composed of at least one sheath made of a suitable filtering material enclosed tightly by a pressure-retaining sheath.

7. The device according to claim 6, **characterized in that** the filtering sheath and the pressure-retaining sheath are made up from superimposed strips of the same width and wound around the mandrel (15).

8. The device according to claim 7, **characterized in that** the strip intended for forming the pressure-retaining sheath has a length greater than the filtering strip.

9. The device according to any one of claims 6 to 7, **characterized in that** the pressure-retaining sheath is made of a stainless steel fabric.

10. The device according to any one of claims 1 to 9, **characterized in that** the downstream lining (14) comprises at least one composite material (17).

11. The device according to claim 10, **characterized in that** the composite material (17) is a nonwoven glass fiber.

12. The device according to any one of claims 1 to 11, **characterized in that** a multi-perforated washer (11) is arranged at the inlet of the upstream lining (12).

13. The device according to any one of claims 1 to 12, **characterized in that** a washer with a central hole (13) is arranged between the upstream lining (12) and the downstream lining (14).
